# EUROPÄISCHE PATENTSCHRIFT

(11) **EP 0 356 878 B1**
(45) Veröffentlichungstag und Bekanntmachung des Hinweises auf die Patenterteilung: **15.09.1993**
(21) Anmeldenummer: 89115443.7
(22) Anmeldetag: 22.08.1989
(51) Int. Cl.: C07F 7/16

(54) **Verfahren zur Aufarbeitung von Hydrolyserückständen aus der Organochlorsilansynthese**
Process for reprocessing hydrolysis residues from methyl-chlorosilane synthesis
Procédé de retraitement de restes d'hydrolyse de la synthèse du méthylchlorosilane

(30) Priorität: 01.09.1988 DE 3829581
(43) Veröffentlichungstag der Anmeldung: 07.03.1990
(73) Patentinhaber: BAYER AG, 51368 Leverkusen (DE)
(72) Erfinder: Degen, Bruno, Dr., D-5203 Much (DE); Feldner, Kurt, Dr., D-5090 Leverkusen (DE)

(56) Entgegenhaltungen:
- EP-A- 0 210 418
- US-A- 4 244 818

## Beschreibung

Die vorliegende Erfindung betrifft ein Verfahren zur Aufarbeitung von Hydrolyserückständen, die bei der Hydrolyse von feststoffhaltigen Polysilanschlämmen aus der Organochlorsilansynthese nach dem Direktverfahren anfallen. Insbesondere bezieht sich die Erfindung auf die Aufarbeitung von Hydrolyserückständen aus der Methylchlorsilansynthese.

Organochlorsilane und insbesondere die Methylchlorsilane dienen als Ausgangsmaterialien für die Herstellung von Siliconen, die in weiten Bereichen Anwendung finden, so z. B. als Kautschuke, Fugendichtmassen, Öle, Bautenschutzmittel usw. Besonders erwünscht bei der Herstellung der Methylchlorsilane ist das Dimethyldichlorsilan, welches in hoher Ausbeute erhalten wird, wenn die Direktreaktion von Silicium mit Methylchlorid durch Kupfer bzw. Kupferverbindungen katalysiert wird. Das Verfahren ist grundlegend in der US-PS 2 380 995 beschrieben. Die Herstellung von Methylchlorsilanen nach diesem Verfahren wird weltweit im industriellen Maßstab betrieben, wobei man die Reaktion üblicherweise in kontinuierlich betriebenen Fließbettreaktoren durchführt.

Bei der Durchführung des Direktverfahrens in Fließbettreaktoren werden zusammen mit dem Reaktionsprodukt, der Rohsilanmischung und nicht umgesetztem Methylchlorid ständig auch die Feinstanteile von Silicium, Katalysator und unumgesetzter Kontaktmasse ausgetragen.

Diese Staubanteile werden häufig zusammen mit den höchstsiedenden Reaktionsprodukten (Kp₇₆₀ > 160°C) in einem sogenannten Schlammkessel mit nachgeschaltetem Waschturm gesammelt. Die Temperatur des unter dem üblichen Überdruck von 1,5 - 10 bar stehenden Kessels wird im allgemeinen so eingestellt, daß das Gemisch aus Feststoff und kondensierten Anteilen genügend dünnflüssig gehalten wird, um den Austrag aus diesem Kessel zu ermöglichen.

Gemäß der deutschen Patentschrift 2 362 494 kann der Kesselinhalt in einen bevorzugt unter Normaldruck stehenden Rührbehalter entspannt und die noch destillierbaren Anteile aus dem Gemisch durch Erhitzen ausgetrieben werden. Der Inhalt dieses Kessels wird dann in der Regel einer Hydrolyse zugeführt.

Die Hydrolyse selbst kann, wie in DE-PS 2 362 494 beschrieben, in einem Fallrohr durchgeführt werden. Der Nachteil ist, daß durch die kurzen Kontaktzeiten die Hydrolyse oft nur unvollständig verläuft und große Mengen an Wasser gebraucht werden.

Die DE-OS 3 005 743 beschreibt ein Hydrolyseverfahren, bei dem die unangenehme Eigenschaft des Klebens der Hydrolysate durch Zusatz von Mineralöl verhindert wird. Da aber die Hydrolysate als wertlos betrachtet und deponiert werden, ist die zusätzliche organische Belastung nachteilig.

Aus der EP 0 089 783 geht hervor, daß das Problem des Klebens auch durch die Einhaltung eines Mindestchlorgehaltes bewältigt werden kann, was aber eine technisch schwer zu lösende Aufgabe ist.

Bei all den erwähnten Verfahren entsteht eine salzsaure Suspension, bei der das mehr oder weniger feste Hydrolysat als wertlos gilt und deponiert werden muß. Die Hydrolysate sind allerdings nicht problemlos, denn sie erhalten meist 2 - 10 % überwiegend metallisches Kupfer, welches aus dem deponierten Hydrolysat teilweise eluiert werden kann und somit eine Gefahr für das Grundwasser darstellen kann. Darüber hinaus sind die meisten erhaltenen Hydrolysate oxidationsempfindlich, ja sie neigen in manchen Fällen sogar zur Selbstentzündung, was einer ordnungsgemäßen Deponierung entgegensteht.

Die EP 0 210 418 beschreibt nun ein Verfahren, bei dem die Hydrolyse in Wasser oder einer stark verdünnten Salzsäure, in einem Rührwerksbehälter mit einem schnell laufenden Scheibenrührer ausgeführt wird, wobei dieser Behälter nicht mit Strombrechern ausgerüstet ist, so daß sich eine Trombe ausbilden kann, in die das zu hydrolysierende Material eingetragen wird. Die bevorzugte Temperatur liegt dabei zwischen 60 und 90°C. Man erhält so eine Suspension mit feinteiligen festen Hydrolysaten, in denen mehr als 90 % der Feststoffteilchen Durchmesser < 5 mm aufweisen.

Die so erhaltenen Suspensionen werden anschließend mit Sauerstoff enthaltenden Gasen oxidiert, was gemäß der oben zitierten Erfindung bevorzugt mit technisch reinem Sauerstoff unter gegenüber Atmosphärendruck erhöhtem Druck erfolgt.

Nach beendeter Oxidation werden Feststoff und kupferhaltige Flüssigkeit voneinander getrennt.

Mit dem in der EP 0 210 418 beschriebenen Verfahren erhält man dann einen deponiefähigen, stichfesten, nicht gasenden, keine eluierbaren Schwermetalle enthaltenden und im Sinne der Erfindung thermisch inerten Feststoff, der ordnungsgemäß deponiert werden kann.

Gegenstand der vorliegenden Erfindung ist nun ein Verfahren zur Aufarbeitung von bei der Organochlorsilansynthese anfallenden hochsiedenden und feststoffhaltigen Rückständen, die hydrolysiert und anschließend oxidiert werden, dadurch gekennzeichnet, daß bei der Hydrolyse und/oder der Oxidation zur hydrophilen Einstellung der Feststoffoberfläche in der Lösung ein anorganischer Niederschlag aus Wasserglaslösung oder Kieselsol erzeugt wird.

Der erfindungsgemäße Zusatz eines oberflächenaktiven Stoffes ist nicht an die Kombinationen Hydrolyse und Oxidation gebunden, sondern kann auch bei der Hydrolyse ohne anschließende Oxidation zur Anwendung kommen. In der Regel bewirkt die bessere Benetzung eine weniger ausgeprägte Neigung des Hydrolysates zum Kleben und führt so zu einer geringeren Verschmutzung der produktführenden Anlagenteile.

Die bevorzugte Art der Hydrolyse besteht darin, daß man die oberflächenaktive Substanz dem Wasser oder der stark verdünnten Salzsäure, die dem Rührwerksbehälter mit einem schnellaufenden Scheibenrührer zum Zwecke der Hydrolyse des hochsiedenden und feststoffhaltigen Rückstandes aus der Organochlorsilansynthese zugeführt wird, zusetzt und so die Oberfläche hydrophil einstellt.

Die bevorzugte Art der Oxidation besteht darin, daß man den die Oberfläche hydrophil beeinflussenden Stoff beim Füllen des Oxidationsbehälters der zu oxidierenden Suspension zusetzt. Auch ist es möglich, einen Teil der oberflächenaktiven Substanz bei der Hydrolyse und einen weiteren Teil bei der Oxidation zuzusetzen.

Der überraschende Vorteil bei der Durchführung des Aufarbeitungsverfahrens gemäß der vorliegenden Erfindung besteht darin, daß man eine bessere Benetzung des zu hydrolysierenden hochsiedenden und feststoffhaltigen Rückstandes und damit verbunden eine effektivere Hydrolyse erreicht und daß bei der Oxidation, die erfindungsgemäß bevorzugt durch Begasen der bei der Hydrolyse erhaltenen Suspension mit technisch reinem Sauerstoff unter gegenüber Atmosphäredruck erhöhtem Druck bei Temperaturen von 80 ± 10°C erfolgt, Flotations- und Schaumbildungseffekte vermieden werden, die die Reaktionsführung negativ beeinflussen können.

Die Stoffe, die die Oberflächeneigenschaften des Hydrolysates im Sinne der vorliegenden Erfindung beeinflussen sind rein anorganischer Natur und bilden im mineralsauren Medium einen Niederschlag, der an der Hydrolysatoberfläche adsorbiert wird und so für den hydrophilen Charakter sorgt.

Geeignet sind entweder alkalische Silikatlösungen wie z. B. Wasserglaslösung oder aber Kieselsole. Beim Zusatz der genannten Stoffe zur Hydrolysatsuspension oder aber zum Hydrolysewasser fällt aufgrund der entweder schon gegenwärtigen oder bei der Hydrolyse entstehenden Salzsäure SiO₂ aus. Der feinteilige Niederschlag wird an der Hydrolysatoberfläche adsorbiert und sorgt aufgrund seines hydrophilen Charakters für die Hydrophilierung der Hydrolysatoberfläche.

Die benötigte Menge der oberflächenaktiven bzw. hydrophilen Charakter verleihenden Substanz ist abhängig von der Menge des in der Suspension vorhandenen Feststoffs und dessen Feinheit.

In den meisten Fällen werden bei der Hydrolyse Suspensionen von 20 - 30 Gew.-% festen Hydrolysates, bestimmt als feuchter Filterkuchen, angestrebt. Für solche Suspensionen muß man erfahrungsgemäß zwischen 100 und 5.000 ppm, berechnet als Gewichtsteile der Wirksubstanz auf die Gesamtmenge der Suspension, einsetzen. Bevorzugt werden Zusätze zwischen 200 und 3.000 ppm Wirksubstanz bezogen auf die gesamte Suspension.

Die erfindungsgemäß eingesetzten anorganischen Stoffe haben den Vorteil, daß die organische Abwasserbelastung durch ihren Einsatz nicht weiter erhöht wird.

Das bevorzugte Vorgehen gemäß der vorliegenden Erfindung wird anhand der beigefügten Abbildung und der folgenden Beispiele näher erläutert, wobei die Beispiele illustrativen und nicht einschränkenden Charakter haben.

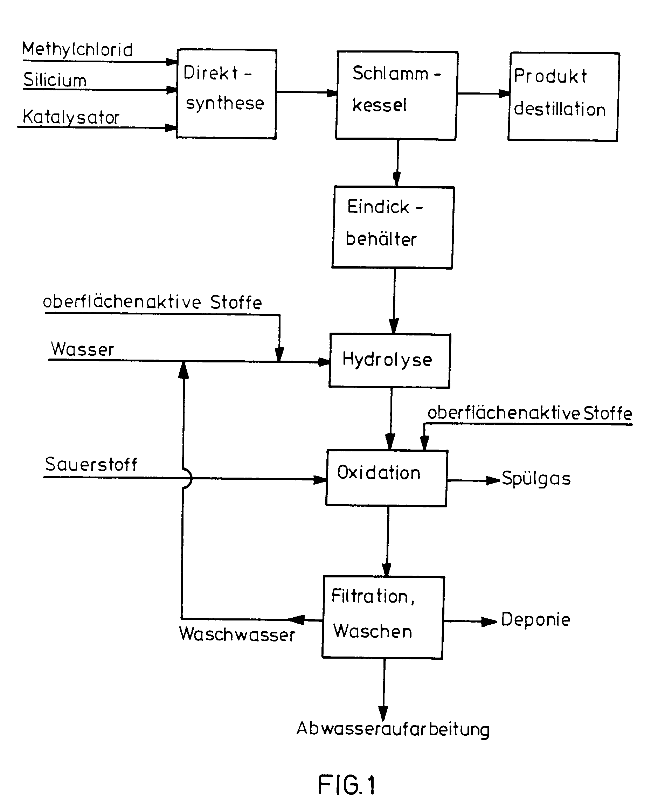

In der Abbildung Fig. 1 ist der übliche Verfahrensweg dargestellt: Aus den "Direktsynthesereaktoren" treten gasförmige Reaktionsprodukte, unumgesetztes Methylchlorid und Feinanteile in das Schlammgefäß ein. Hier werden die nichtflüchtigen Bestandteile aufgefangen. Die flüchtigen Bestandteile verlassen das Gefäß, um in die Produktdestillation zu gelangen. Mittels eines Taktventils wird der nichtflüchtige Inhalt entspannt und in einen Eindicker eingeleitet, um bei Atmosphäredruck flüchtige Verbindungen zu gewinnen.

Die Hydrolyse wird in einem mit einem Rührer ausgerüsteten Reaktionsgefäß mit Wasser oder verdünnter HCl durchgeführt.

Oberflächenaktive Stoffe können nun erfindungsgemäß dem für die Hydrolyse benötigten Wasser über die Wasserzuleitung zugesetzt werden oder, falls erwünscht, erst im nächsten Schritt, nämlich beim Befüllen des Oxidationsreaktors, in dem die Begasung mit dem den elementaren Sauerstoff enthaltenden Gas stattfindet, gegebenenfalls können an beiden Stellen Teilmengen aufgegeben werden. Nach der Oxidation wird mittels einer geeigneten Filtriereinrichtung der Feststoff von der wäßrigen Flüssigkeit getrennt, diese einer geeigneten Abwasserbehandlungsanlage zugeführt und der Feststoff gewaschen und anschließend deponiert. Das Waschwasser kann gegebenenfalls wieder zur Hydrolyse eingesetzt werden.

### Beispiel

Das Beispiel zeigt die Veränderung im Schäumungs- und Benetzungsverhalten einer Hydrolysesuspension hervorgerufen durch den Zusatz von Kieselsol. Die Experimente wurden in einer Begasungsapparatur mit drei Strömungsbrechern und einem Begasungsrührer durchgeführt.

Begasungsbedingungen:
Begasungsrührer ⌀ = 4,6 cm
Rührgeschwindigkeit: 1585 ± 30 UpM
Gefäßdurchmesser : 15 cm
Gefäßhöhe : 60 cm
Füllhöhe : ca. 17,5 cm
Die Suspension (3 kg) hatte eine Konzentration von 20 Gew.-% an feuchtem Feststoff.

Verwendet wurden die anionischen BAYER-Kieselsole 100/30 %, 200/30 % und 300/30 %. (Hersteller Bayer AG, Leverkusen).

| Zugesetzte Menge: 3ml | Schaumhöhe bei Begasung | Absetzverhalten des Feststoffes nach Beendigung der Begasung |
|---|---|---|
| Kieselsol 100/30 % | 3 cm | Schaum bricht sofort zusammen, Feststoff vollständig benetzt |
| Kieselsol 200/30 % | 3 cm | Schaum bricht sofort zusammen, Feststoff vollständig benetzt, ca. 50 % sedimentieren |
| Kieselsol 300/30 % | 3 cm | Schaum bricht sofort zusammen, Feststtoff sedimentiert |
| Vergleichsversuch ohne Zusatz | 35 cm | Schaum bleibt stabil ca. 20 % Feststoff schwimmen auf |

## Patentansprüche

1. Verfahren zur Aufarbeitung von bei der Organochlorsilansynthese anfallenden hochsiedenden und feststoffhaltigen Rückständen, die hydrolysiert und gegebenenfalls anschließend mit sauerstoffhaltigen Gasen oxidiert werden, dadurch gekennzeichnet, daß bei der Hydrolyse und/oder der Oxidation zur hydrophilen Einstellung der Feststoffoberfläche in der Lösung ein anorganischer Niederschlag aus Wasserglaslösung oder Kieselsol erzeugt wird.

2. Verfahren nach Anspruch 1, dadurch gekennzeichnet, daß Wasserglaslösung oder Kieselsol in Mengen von 100 ppm bis 5.000 ppm (berechnet als SiO₂), bezogen auf die Hydrolysesuspension, eingesetzt werden.

## Claims

1. A process for working up high-boiling, solids-containing residues obtained in the synthesis of organochlorosilanes which are hydrolyzed and then optionally oxidized with oxygen-containing gases, characterized in that an inorganic deposit of waterglass solution or silica sol is produced during the hydrolysis and/or oxidation to hydrophilicize the surface of the solids in the solution.

2. A process as claimed in claim 1, characterized in that the waterglass solution or silica sol is used in quantities of 100 ppm to 5000 ppm (expressed as SiO₂), based on the hydrolysis suspension.

## Revendications

1. Procédé de retraitement de résidus de haut point d'ébullition et contenant des matières solides, obtenus dans la synthèse d'organochlorosilanes, qui sont hydrolysés puis, le cas échéant, oxydés avec des gaz contenant de l'oxygène, caractérisé en ce qu'un précipité inorganique est produit à partir d'une solution de verre soluble ou d'un sol de silice lors de l'hydrolyse et/ou de l'oxydation en vue de rendre hydrophile la surface de la matière solide dans la solution.

2. Procédé suivant la revendication 1, caractérisé en ce qu'une solution de verre soluble ou du sol de silice sont utilisés en quantités de 100 ppm à 5000 ppm (exprimées en SiO₂) par rapport à la suspension à hydrolyser.
